# EUROPEAN PATENT SPECIFICATION

(11) **EP 1 779 012 B1**
(45) Date of publication and mention of the grant of the patent: **26.08.2009**
(21) Application number: 05773742.1
(22) Date of filing: 20.07.2005
(51) Int. Cl.: F16K 31/126, G05D 16/06

(54) **ACTUATOR CASING**
STELLGLIEDGEHÄUSE
BOÎTIER D'ACTIONNEUR

(30) Priority: 23.07.2004 US 590741 P
(43) Date of publication of application: 02.05.2007
(73) Proprietor: FISHER CONTROLS INTERNATIONAL LLC, St. Louis, MO 63136 (US)
(72) Inventor: ANDERSON, Paul, Richard, McKinney, TX 75070 (US); FLAUGHER, Joseph, David, Muscatine, IA 52761 (US); GRIFFIN, James, Lyman, Jr., Marshalltown, IA 50158 (US); PFANTZ, Douglas, Craig, Melbourne, IA 50162 (US); LUKENSMEYER, Andrew, Jared, McKinney, TX 75070 (US); ROPER, Daniel, Gunder, Lucas, TX 75002 (US); SCOTT, Gary, Lynn, Marshalltown, IA 50158-3954 (US)
(74) Representative: Bohnenberger, Johannes
(86) International application number: PCT/US2005/025781
(87) International publication number: WO 2006/014763

(56) References cited:
- FR-A- 1 298 042
- GB-A- 821 532
- US-A- 1 537 704

## Description

### FIELD OF THE DISCLOSURE

The present disclosure relates generally to fluid control devices and, more specifically, to a forged aluminum actuator casing for use with a fluid regulator disposed within a valve body.

### BACKGROUND

Process control plants or systems often employ fluid control devices (e.g., control valves, pressure regulators, etc.) to control the flow and pressure of process fluids such as, for example, liquids, gases, etc. One particularly important fluid valve application involves the distribution and delivery of natural gas. Typically, many portions of a natural gas distribution system are configured to convey or distribute relatively large volumes of gas at relatively high pressure. The relatively high pressure at which the gas is conveyed reduces the flow rates needed to deliver a desired volume of gas and, thus, minimizes the distribution efficiency losses (e.g., pressure drops) due to piping restrictions, valve restrictions, etc.

In addition to being configured to control relatively high-pressure gas, the fluid valves used within a natural gas distribution system must also be configured to minimize or eliminate the escape of natural gas into the surrounding ambient or atmosphere. The escape of natural gas from a fluid valve can result in dangerous conditions such as, for example, explosions, fire, asphyxiation of persons, etc.

Thus, the actuators used to control the flow of natural gas through a fluid valve body must be designed to withstand the high gauge pressures associated with natural gas distribution. In addition, the actuators must be designed to bleed or vent little, if any, gas to the surrounding atmosphere or ambient. As a result, the casings used for the actuators are typically designed to provide high strength and to minimize or eliminate venting or bleeding of gas to atmosphere.

Some actuator casings designed for use with natural gas control devices (e.g., pressure reducing regulators) use stamped or forged steel casing halves. A steel actuator casing provides a relatively high degree of strength and can withstand extremely high gauge pressures over a relatively long service life. Further, steel actuator casings are substantially non-porous and, as a result, are not prone to bleeding or venting of the gas being controlled to atmosphere. While steel actuator casings provide excellent safe, reliable performance for a wide range of control pressures, such steel casings are cost prohibitive and too heavy for many lower pressure gas distribution applications. For instance, the control of natural gas within a natural gas

### DESCRIPTION

distribution system typically involves lower pressures nearer to the points of delivery or usage.

Cast aluminum actuator casings as disclosed in US 3042064 are typically used to implement the fluid valves that control lower pressure gas within a gas distribution system. Cast aluminum casings are relatively inexpensive but are typically porous and may have voids within the walls of the casings. The porosity and voids require a higher safety factor (i.e., the ratio of maximum or burst pressure to rated operating pressure) to be used and, thus, greater wall thickness. Some cast aluminum actuator casing designs require a safety factor as high as four to one. The greater wall thickness needed results in the use of more material, which increases both the weight and the cost of the cast aluminum casings.

Additionally, the porosity of the cast aluminum casings requires the casing halves to be sealed via a secondary process. One known process involves chemically impregnating the cast aluminum casing halves with, for example, an adhesive or sealant. However, such secondary processing steps are costly and prone to some degree of yield loss (i.e., some parts may not be adequately sealed to be used in a shippable valve).
Further information pertaining to the prior art can be found in US patent 1,537,704 that has been interpreted by the European Patent Office as disclosing an actuator casing for housing a diaphragm and diaphragm plate for use with a valve, the actuator casing comprising: a first portion; a first flange around a perimeter of the first portion; a second portion; a second flange around a perimeter of the second portion; apertures in each of the first and second flanges; at least one fastening device that couples the first and second flanges via their respective apertures; and wherein the shape and thickness of the first and second portions are configured to closely profile the diaphragm and diaphragm plate.
GB 821 532 discloses a pressure regulator comprising a housing provided with a recess formed with an internal screw thread by which the housing can be screwed on a gas container; a stem adapted to enter the gas container and arranged in the recess coaxially thereof, the said stem being provided with a gas inlet passage; a gas outlet; a diaphragm chamber; a first gas flow passage connecting the inlet passage to the diaphragm chamber and a second gas flow passage connecting the outlet to the diaphragm chamber, a movable diaphragm sealing the diaphragm chamber, a check valve which has a spring loading tending to dose the valve and which is positioned in the first gas flow passage, the said check valve having a stem extending into the diaphragmn chamber into contact with the diaphragm, spring means biassing the diaphragm towards the check valve normally to maintain the check valve in its open position, the check valve being movable to its closed position upon movement of the diaphragm caused by pressure increase in the diaphragm chamber.
FR 1 298 042 discloses a somewhat similarly constructed vacuum regulator.

### BRIEF DESCRIPTION OF THE DRAWINGS

FIG. 1 depicts an example forged aluminum actuator casing for use with fluid valves.

FIG. 2 is a cross-sectional view of an example gas valve that uses the example actuator casing of FIG. 1.

FIG. 3 depicts the upper actuator casing half of the example forged aluminum actuator casing of FIG. 1.

FIG. 4 is a detailed plan view of the upper actuator casing half of FIG. 3.

FIG. 5 is a detailed cross-sectional view of the upper actuator casing half of FIG. 3.

FIG. 6 depicts the lower actuator casing half of the example forged aluminum actuator casing of FIG. 1

FIG. 7 is a detailed plan view of the lower actuator casing half of FIG. 6.

FIG. 8 is a detailed cross-sectional view of the lower actuator casing half of FIG. 6.

### DETAILED DESCRIPTION

The example forged aluminum actuator casing described herein provides a significantly lower weight part in comparison to conventional cast aluminum actuator casings. In particular, the material and processing techniques used to fabricate the example forged aluminum actuator casing described herein results in a casing that is substantially non-porous and non-ferrous and which is substantially more ductile that cast aluminum actuator casings. The substantial ductility of the example forged aluminum actuator casing described herein (as well and the non-porous nature of the example casing) significantly reduces the design safety factor (i.e., the ratio of the maximum safe pressure to rated operating pressure of the actuator casing). For example, a safety factor of about four to one is typically used when designing cast aluminum actuator casings, whereas with the example forged aluminum actuator casing described herein, a safety factor of about one and a half to one may be used.

The reduced safety factor associated with the example forged aluminum actuator casing described herein enables the production of an aluminum casing having significantly reduced wall thicknesses in comparison to cast aluminum casings. The reduced wall thicknesses, in turn, result in an actuator casing composed of significantly less material (and which weighs significantly less) than a comparable performance cast aluminum actuator casing. In addition to being lighter weight in comparison to cast aluminum actuator casings, the forged aluminum actuator casing described herein is substantially non-porous and, thus, a secondary sealing process (such as those conventionally used with known cast aluminum actuator casings) is not needed.

Further, the example forged aluminum actuator casing described herein may be fabricated using a material complying with The American Society of Mechanical Engineers (ASME) standard SB247 CL.T4, which may be formed from Unified Numbering System for Metal and Alloys (UNS) standard A92014 aluminum. The use of such an ASME compliant material can greatly simplify the approval process for applications using the example forged aluminum actuator in many world markets. For example, the aforementioned material (i.e., ASME SB247 CL.T4) is compliant with the ASME boiler code, which greatly simplifies the approval process for the example forged aluminum actuator casing described herein.

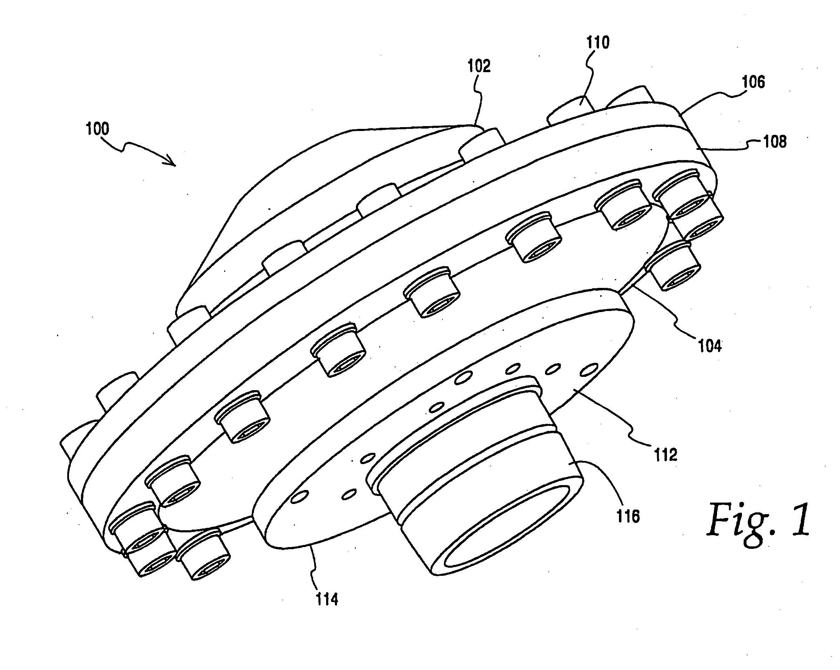

Now turning to FIG. 1, an example forged aluminum actuator casing 100 for use with fluid valves is shown. The example forged aluminum actuator casing 100 includes an upper casing half 102 and a lower casing half 104. The terms "upper" and "lower" are merely used to distinguish the first and second halves of the actuator casing 100 and are not intended to be restrictive of the manner in which the example actuator casing 100 is used. For example, the actuator casing 100 may be field mounted in any desired orientation to satisfy the needs of a particular application and the casing halves 102 and 104 may still be referred to as "upper" and "lower," respectively.

The casing halves 102 and 104 are sealingly coupled at respective flange portions 106 and 108 via fasteners 110. The fasteners 110 may be any suitable fastening mechanism such as, for example, nuts, bolts, washers, etc.

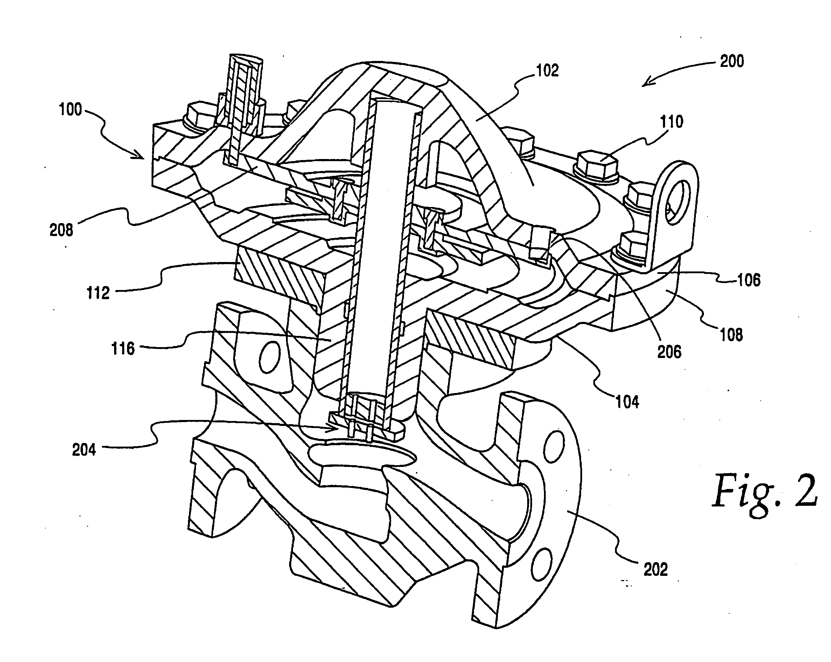

The lower casing 104 includes a mounting flange portion 112 that enables the actuator casing 100 to be fixed (e.g., bolted) to a valve body as depicted in FIG. 2. The mounting flange portion 112 may include a pattern of holes or other apertures 114 that enable the actuator casing 100 to be fixed to any one of a plurality of different valve bodies. The lower casing 104 also includes a hub portion 116 which, as shown in greater detail in FIG. 2, serves to align and couple the actuator casing 100 to a valve body, guide the operation of the valve trim, facilitate the tight sealing of the actuator casing 100 to a valve body, etc.

FIG. 2 is a cross-sectional view of an example gas valve 200 that uses the example actuator casing 100 of FIG. 1. FIG. 2 generally depicts an example relationship between the example actuator casing 100 and a valve body 202 and valve trim 204. The valve body 202 and valve trim 204 may be any known or other suitable valve body and trim and, thus, are not described further herein. As depicted in FIG. 2, a diaphragm 206 and a diaphragm plate 208 may be disposed within the actuator casing 100.

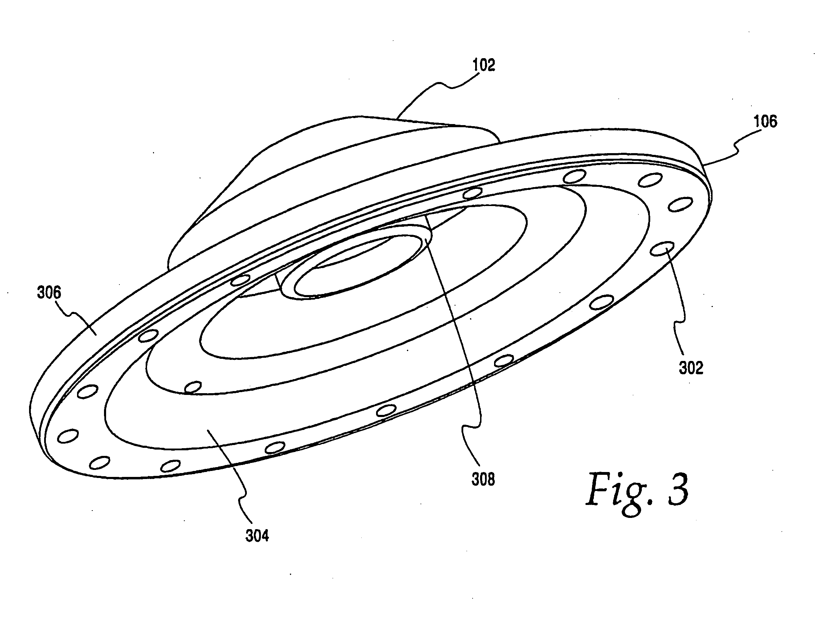

FIG. 3 depicts the upper actuator casing half 102 of the example forged aluminum actuator 100 casing of FIG. 1. As shown in FIG. 3, the upper actuator casing half 102 includes a plurality of apertures 302 that are circumferentially spaced about the flange portion 106. A first angled wall portion 304 extends between the flange portion 106 and a shoulder portion 306. The shoulder portion 306 may be configured to function as a mechanical support or stop against which the diaphragm plate 208 and/or the diaphragm 206 may be supported and/or stopped. The depth and angle of the wall portion 304 may be selected to achieve a desired amount of diaphragm travel and/or to control the stresses applied to the diaphragm 206 during use of the actuator 100 (FIG. 1). The upper casing half 102 also includes a hub 308, which may be used to guide the operation the valve trim 204 and/or a bias spring (not shown).

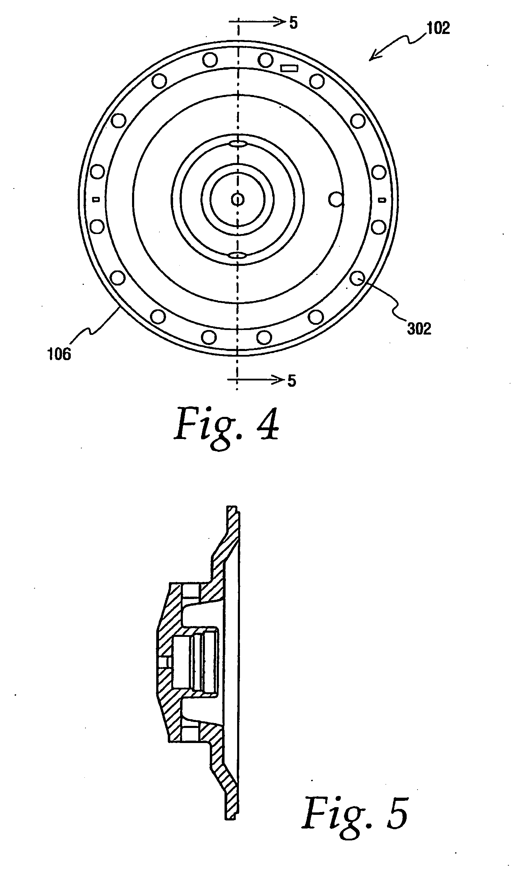

FIG. 4 is a detailed plan view of the upper actuator casing half 102 of FIG. 3 and FIG. 5 is a detailed cross-sectional view of the upper actuator casing half 102 of FIG. 3.

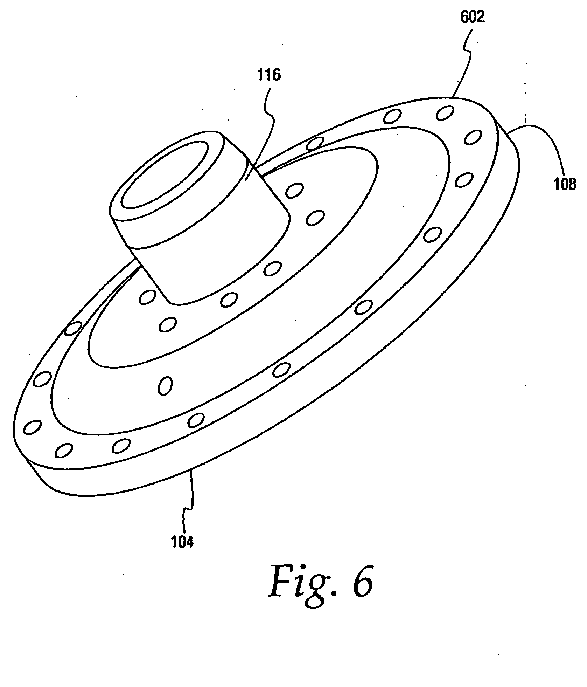

FIG. 6 depicts the lower actuator casing half 104 of the example forged aluminum actuator casing 100 of FIG. 1. The lower actuator casing half 104 includes a plurality of apertures 602 configured to receive the fasteners 110 as shown in FIG. 1.

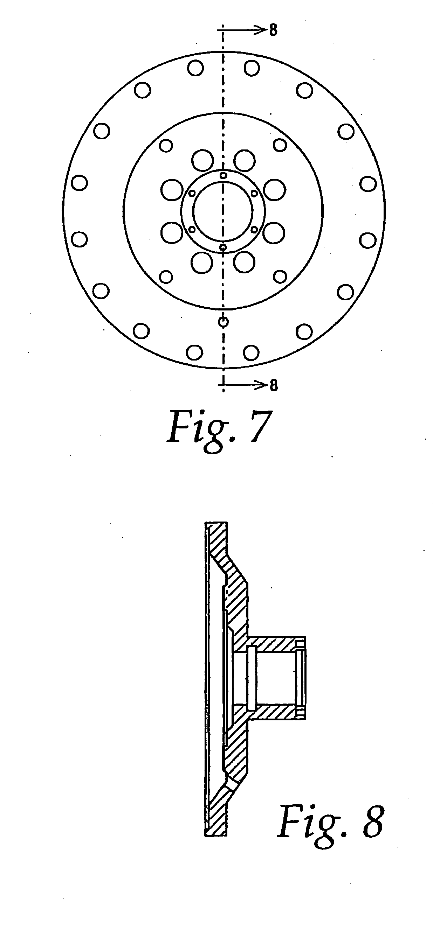

FIG. 7 is a detailed plan view of the lower actuator casing half 104 of FIG. 6 and FIG. 8 is a detailed cross-sectional view of the lower actuator casing half 104 of FIG. 6.

In some applications such as, for example, pit applications, the actuator casing halves 102 and 104 may be anodized to protect the casing halves 102 and 104 from corrosion and the like.

## Claims

1. A substantially non-porous, non-ferrous actuator casing (100) for use with a valve (200), the actuator casing comprising:
a first forged aluminum casing portion (102) having a first flange (106) around a perimeter of the first forged aluminum casing portion;
a second forged aluminum casing portion (104) having a second flange (108) around a perimeter of the second forged aluminum casing portion; and
a plurality of apertures (302, 602) in each of the first and second flanges, wherein
at least some of the apertures in the first flange correspond to at least some of the apertures in the second flange, and
the corresponding apertures are configured to receive fasteners to couple the first and second forged aluminum casing portions to form the actuator casing.

2. An actuator casing as defined in claim 1, wherein the first forged aluminum casing portion further includes a first hub (308) of forged aluminum and the second forged aluminum casing portion further includes a second hub (116) of forged aluminum.

3. An actuator casing as defined in claim 2, wherein the hubs are configured for one of aligning the actuator casing with a valve body, guiding the operation of a valve trim, or facilitating the tight sealing of the actuator casing to a valve body.

4. An actuator casing as defined in claim 1, wherein the first and second forged aluminum casing portions are configured to be sealingly coupled.

5. An actuator casing as defined in claim 1, wherein the first forged aluminum casing portion has a back portion (306) and an angled portion (304).

6. An actuator casing as defined in claim 5, wherein the back portion functions as a stop for a diaphragm.

7. An actuator casing as defined in claim 5, wherein the angled portion is sized and angled to achieve a desired amount of diaphragm movement.

8. An actuator casing as defined in claim 1, wherein the first and second forged aluminum casing portions are substantially non-porous.

9. An actuator casing as defined in claim 1, wherein the first and second forged aluminum casing portions are made of a forged aluminum that complies with the American Society of Mechanical Engineers (ASME) standard SB247 CL.T4.

## Patentansprüche

1. Im wesentlichen nichtporöses, nichteisenhaltiges Betätigergehäuse (100) zur Verwendung mit einem Ventil (200), wobei das Betätigergehäuse folgendes aufweist:
einen ersten geschmiedeten Aluminiumgehäusebereich (102), der einen ersten Flansch (106) um einen Umfang des ersten geschmiedeten Aluminiumgehäusebereichs herum aufweist;
einen zweiten geschmiedeten Aluminiumgehäusebereich (104), der einen zweiten Flansch (108) um einen Umfang des zweiten geschmiedeten Aluminiumgehäusebereichs herum aufweist; und
eine Vielzahl von Öffnungen (302, 602) in jedem von dem ersten und dem zweiten Flansch, wobei
mindestens einige der Öffnungen in dem ersten Flansch mindestens einigen der Öffnungen in dem zweiten Flansch entsprechen, und
die jeweils entsprechenden Öffnungen so ausgebildet sind, daß sie zum Koppeln des ersten und des zweiten geschmiedeten Aluminiumgehäusebereichs Befestigungselemente aufnehmen, um das Betätigergehäuse zu bilden.

2. Betätigergehäuse nach Anspruch 1, wobei der erste geschmiedete Aluminiumgehäusebereich ferner eine erste Nabe (308) aus geschmiedetem Aluminium aufweist und der zweite geschmiedete Aluminiumgehäusebereich ferner eine zweite Nabe (116) aus geschmiedeten Aluminium aufweist.

3. Betätigergehäuse nach Anspruch 2, wobei die Naben für eines von folgendem ausgebildet sind: Ausfluchten des Betätigergehäuses mit einem Ventilkörper, Führen des Betriebs einer Ventilgarnitur oder Ermöglichen des hermetischen Abdichtens des Betätigergehäuses gegen einen Ventilkörper.

4. Betätigergehäuse nach Anspruch 1, wobei der erste und der zweite geschmiedete Aluminiumgehäusebereich ausgebildet sind, um abdichtend miteinander gekoppelt zu werden.

5. Betätigergehäuse nach Anspruch 1, wobei der erste geschmiedete Aluminiumgehäusebereich einen Rückenbereich (306) und einen abgewinkelten Bereich (304) hat.

6. Betätigergehäuse nach Anspruch 5, wobei der Rückenbereich als ein Anschlag für eine Membran wirksam ist.

7. Betätigergehäuse nach Anspruch 5, wobei der abgewinkelte Bereich so bemessen und abgewinkelt ist, daß ein gewünschtes Ausmaß an Membranbewegung erzielt wird.

8. Betätigergehäuse nach Anspruch 1, wobei der erste und der zweite geschmiedete Aluminiumgehäusebereich im wesentlichen nichtporös sind.

9. Betätigergehäuse nach Anspruch 1, wobei der erste und der zweite geschmiedete Aluminiumgehäusebereich aus geschmiedetem Aluminium bestehen, das dem Standard SB247 CL.T4 der American Society of Mechanical Engineers (ASME) entspricht.

## Revendications

1. Boîtier de dispositif d'actionnement non ferreux et sensiblement non poreux (100) pour usage avec une soupape (200), le boîtier de dispositif d'actionnement comprenant :
une première partie de boîtier en aluminium forgé (102) ayant une première bride (106) autour d'un périmètre de la première partie de boîtier en aluminium forgé ;
une seconde partie de boîtier en aluminium forgé (104) ayant une seconde bride (108) autour d'un périmètre de la seconde partie de boîtier en aluminium forgé ; et
une pluralité d'ouvertures (302, 602) dans chacune des première et seconde brides, dans lequel
au moins certaines des ouvertures dans la première bride correspondent à au moins certaines des ouvertures dans la seconde bride, et
les ouvertures correspondantes sont configurées pour recevoir des fixations pour coupler les première et seconde parties de boîtier en aluminium forgé pour former le boîtier de dispositif d'actionnement.

2. Boîtier de dispositif d'actionnement selon la revendication 1, dans lequel la première partie de boîtier en aluminium forgé comprend un premier moyeu (308) en aluminium forgé et la seconde partie de boîtier en aluminium forgé comprend en outre un second moyeu (116) en aluminium forgé.

3. Boîtier de dispositif d'actionnement selon la revendication 2, dans lequel les moyeux sont configurés pour une des opérations suivantes : aligner le boîtier de dispositif d'actionnement avec un corps de soupape, guider l'opération d'équilibrage d'une soupape ou faciliter le scellage étanche du boîtier de dispositif d'actionnement sur un corps de soupape.

4. Boîtier de dispositif d'actionnement selon la revendication 1, dans lequel les première et seconde parties de boîtier en aluminium forgé sont configurées pour être couplée de manière étanche.

5. Boîtier de dispositif d'actionnement selon la revendication 1, dans lequel la première partie de boîtier en aluminium forgé a une portion arrière (306) et une portion angulaire (304).

6. Boîtier de dispositif d'actionnement selon la revendication 5, dans lequel la partie arrière opère comme un arrêt pour un diaphragme.

7. Boîtier de dispositif d'actionnement selon la revendication 5, dans lequel la partie angulaire est dimensionnée et inclinée pour assurer une quantité souhaitée de mouvement du diaphragme.

8. Boîtier de dispositif d'actionnement selon la revendication 1, dans lequel les première et seconde parties de boîtier en aluminium forgé sont sensiblement non poreuses.

9. Boîtier de dispositif d'actionnement selon la revendication 1, dans lequel les première et seconde parties de boîtier en aluminium forgé sont fabriquées en aluminium forgé qui répond à la norme SB247 CL.T4 de l'American Society of Mechanical Engineers (ASME).
